# EUROPEAN PATENT APPLICATION

(11) **EP 0 640 988 A1**
(43) Date of publication of application: **01.03.1995**
(21) Application number: 94112933.0
(22) Date of filing: 18.08.1994
(51) Int. Cl.: G21C 3/322

(54) **Transition piece for reducing coolant pressure drop for bottom entry nuclear fuel assemblies**

(30) Priority: 23.08.1993 US 110641
(71) Applicant: Siemens Power Corporation, Richland, WA 99352 (US)
(72) Inventor: Macduff, Robert B., Richland, WA 99352 (US); Smith, Mark H., Richland, WA 99352 (US)
(74) Representative: Fuchs, Franz-Josef, Dr.-Ing.

(57) **Abstract**

A nuclear fuel assembly includes a fuel assembly support plate with a round orifice for the passage of a flow stream and having a rectangular or square channel entry area immediately below the fuel assembly. The assembly includes a transition piece for coupling the flow stream from the orifice to the channel entry area. The transition piece has a first cylindrical portion with a constant diameter at least as large as the diameter of the orifice and disposed immediately above the orifice for allowing the flow stream from the orifice to fully enter the first portion and attach to the inner sides of the first portion. A second portion is included for coupling to the channel entry area. The second portion has a rectangular or square upper section and a round lower section. A conical third portion is included for connecting the first portion with the round lower section of the second portion for allowing controlled expansion of fluid in said transition piece. The conical portion has a cross-sectional diameter which increases in the flow direction from the first portion to the second portion for allowing controlled expansion of fluid in the transition piece.

## Description

### CROSS REFERENCE TO RELATED APPLICATIONS

Reference is made to the application entitled "Method for Modifying Existing Transition Pieces in Bottom Entry Nuclear Assemblies for Reducing Coolant Pressure Drop" filed simultaneously herewith.

### BACKGROUND OF THE PRESENT INVENTION

### a) Field of the Invention

The present invention relates to coolant flow transition pieces in bottom entry fuel assembly type nuclear reactors and, in particular, a modified design of such transition piece to reduce coolant pressure drop.

### b) Background Art

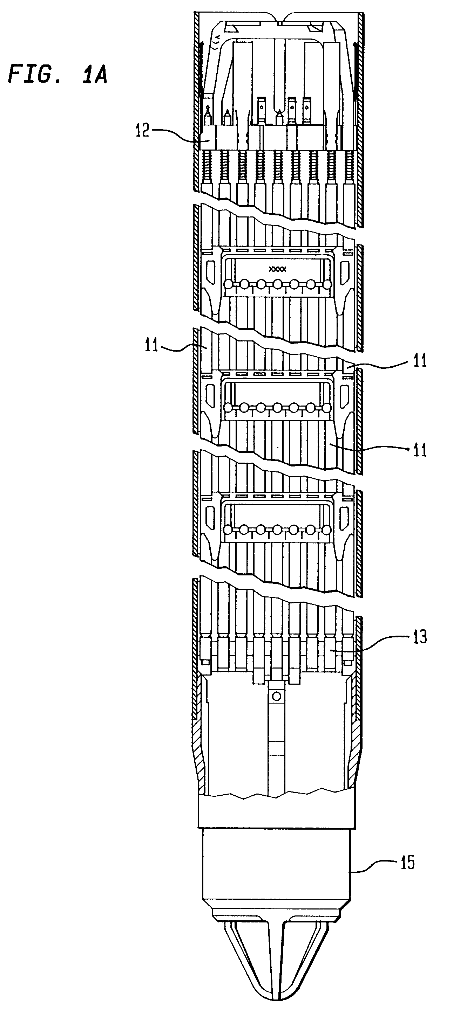

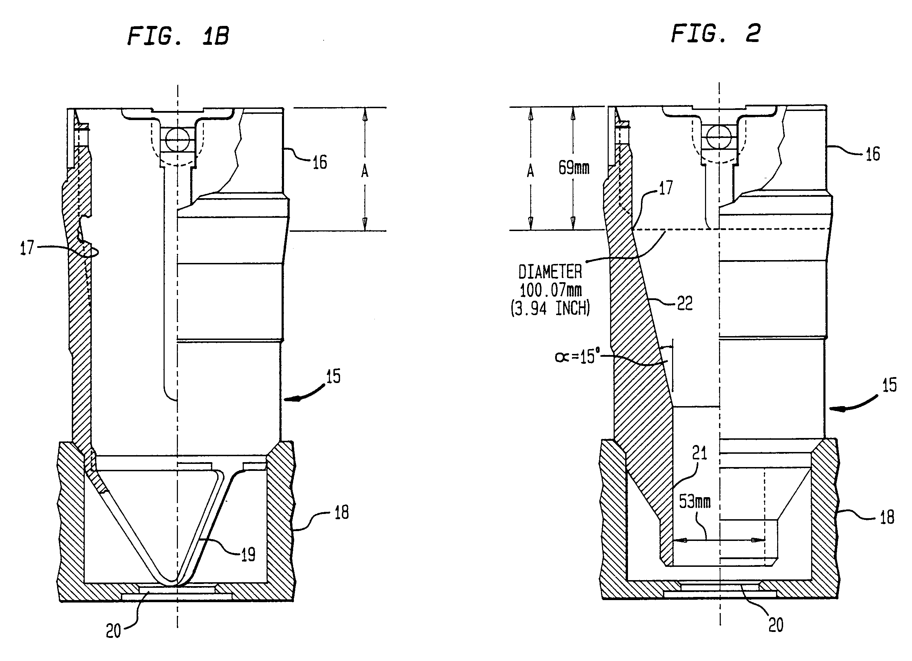

Figure 1a illustrates a bottom entry fuel assembly 10 of the prior art typically used in BWR reactors. The assembly includes a number of nuclear fuel rods 11 disposed between upper and lower tie plates 12 and 13. The assembly includes at the bottom of the lower tie plate a transition section 15 for directing coolant into the fuel assembly. The transition section 15 is better shown in Figure 1b with reference to the fuel assembly support plate 18. The transition section, hereafter referred to as the transition piece 15, may be either separate from the lower tie plate grid or it may be integral with the grid, dependent on the designed interface with the fuel channel.

Referring to Figure 1b, the transition piece 15 between the fuel assembly and the fuel supporting plate 18 in such bottom entry fuel assemblies is subject to certain constraints. The top portion 16 must interface with a channel in a prescribed manner and is generally square in shape. The portion which goes from round to square is indicated as A and in one prior art arrangement was about 69 mm. The portion 17 of the transition piece extending downward to the fuel assembly support plate 18 in Figure 1b is generally round and must seat in a specific diameter opening of specific depth. The distance between the fuel assembly support plate and the fuel assembly itself is defined.

In the prior design as shown in Figures 1a and 1b, the lower end of the transition piece 15 comprises a three-prong lead in finger 19 which is located just above the orifice 20 when the transition piece 15 is seated on the fuel assembly support plate 18. This prior arrangement allowed uncontrolled expansion of the coolant flow which resulted in a time varying jet of fluid from the orifice. This in turn contributed to fuel rod and water rod vibration which resulted in failure of lower end caps.

In this prior design, in particular, as the flow field passes through the opening in the fuel support plate, it narrows in diameter and then expands. The primary portion of the flow field remains at a velocity typical of the orifice cross section and requires several orifice diameters of downstream motion before the boundaries of the jet expand to contact the inner wall in the known standard transition piece. Because the jet does not expand to contact with the transition piece, it oscillates from side to side within the transition piece. With higher flow rates, the length of the identifiable flow field from the orifice becomes longer, i.e., more down stream diameters of flow are required to achieve contact with the standard transition piece. The oscillatory behavior of the flow field occurs over the entire length of the transition piece for flows typical of the central orifice regions of bottom entry fuel assembly type reactors.

Experiments have been performed to observe the flow passing through an orifice and standard transition piece. These experiments confirm the oscillatory behavior of the jet entering the transition piece, i.e., the jet fails to re-attach to the transition piece and fluctuates from side to side. The retention of an identifiable oscillatory flow field in the transition piece is a factor contributing to mechanical wear on the end caps of the water rods and fuel rods which seat on the lower tie plate immediately downstream of the end of the transition piece. Experiments confirm the mechanical wear on end caps in the presence of the oscillatory jet. In-reactor wear on the end caps has been observed and water rods have been observed to become disengaged from the lower tie plate due to the wear on the end cap.

While various shapes of transition pieces are known in the prior art, none have addressed the particular problem in bottom entry fuel assembly designs as discussed above.

### OBJECTS AND SUMMARY OF THE INVENTION

It is accordingly an object of the invention to provide a transition piece for bottom entry fuel assembly design reactors which avoids the problems of the prior art.

It is a further object of the present invention to provide a transition piece arrangement which reduces the vibration and end cap wear in the nuclear fuel assembly.

It is a still further object of the present invention to provide a transition piece with appropriate diameter, length and expansion angle such that the jet from the orifice provided in the fuel assembly support plate reattaches to the transition piece and expands in a controlled manner in the lower tie plate of the fuel assembly thereby mitigating any time varying path of the coolant and possible vibrations.

In accordance with the invention, in a nuclear reactor having a bottom entry nuclear fuel assembly and a fuel assembly support plate with a round orifice for the passage of a flow stream and having a substantially square coolant channel entry area immediately below the fuel assembly, the improvement comprises a transition piece for coupling the flow stream from the orifice to the channel entry area. The transition piece has a first cylindrical portion with a constant diameter at least as large as the diameter of the orifice and disposed immediately above the orifice for allowing the flow stream from the orifice to fully enter the first portion and attach to the inner sides of the first portion. A second portion is included for coupling to the channel entry area. The second portion has a substantially square upper section and a round lower section. An outwardly flaring third portion is included for connecting the first portion with the round lower section of the second portion. The third portion has a cross sectional diameter which increases in the flow direction from the first portion to the second portion for allowing controlled expansion of fluid in the transition piece.

For a better understanding of the present invention, reference is made to the following description and accompanying drawings while the scope of the invention will be pointed out in the appended claims.

### BRIEF DESCRIPTION OF THE DRAWINGS

Figure 1a is a partial cross-sectional side view of a nuclear fuel assembly having a transition piece in accordance with the prior art;
Figure 1b is a partial cross-sectional side view of the lower portion of the fuel assembly of Figure 1a;
Figure 2 illustrates a partial cross-sectional side view of the fuel assembly having a transition piece in accordance with the present invention; and
Figure 3 illustrates a partial cross-sectional side view of the fuel assembly having an alternative embodiment of a transition piece in accordance with the present invention.

### DESCRIPTION OF THE PREFERRED EMBODIMENTS

In Figure 2, the invention is depicted which overcomes the difficulties with the prior art. In this figure, elements which have the same function as those in Figures 1a and 1b are indicated by like numbers.

The orifice 20 provides entry in the fuel assembly support plate to the flow stream. A first constant diameter portion 21 of the transition piece is disposed immediately above orifice 20. The diameter of this portion 21 is selected to be at least as large as the orifice so as to allow the flow stream from the orifice to fully enter this portion and attach to inner sides of this portion.

Immediately below the fuel assembly is a second transition piece portion 16 which is generally square in its upper section for coupling to the square channel entry portion of the fuel assembly. The second transition piece portion has a round lower section 17 as previously discussed. Between this second portion and the first constant diameter portion lies a third portion 22 of the transition piece which is conical in structure. This structure connects the upper end of the constant diameter portion 21 with the round lower section 17 of the second portion and functions as a diffuser.

The length of constant diameter portion 21 must be sufficient so that the flow through the orifice reattaches to the transition piece. In one embodiment, the length of portion 21 was about 92 mm and its diameter about 53 mm. The diameter of the round entry portion 17 of the second transition piece portion is defined by pre-existing structure in the known design and is approximately 3.94 inches. This dimension is provided as an example only. Thus, the constant diameter portion with smaller inner diameter flares outward through the cone 22, the end of which in turn contacts the round entry portion 17 of the second transition piece portion. In a preferred arrangement, the angle of the side of the cone portion 22 forms about 15 degrees with the vertical (or longitudinal axis). A preferred axial length of the cone portion 22 is 91 mm.

The above arrangement allows the fluid flow to enter the transition piece and expand in a controlled manner along the conical or diffuser portion by attaching to the inner surface thereof. This prevents fluid pressure drop at the inlet and avoids oscillatory behavior. This in turn prevents the lower end caps of the fuel assembly from wearing.

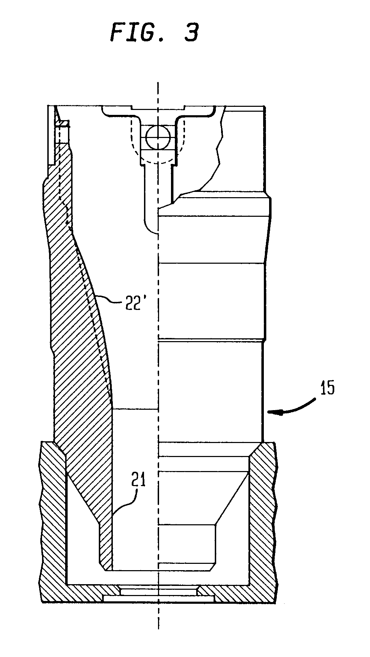

While a conical portion 22 is shown, an outwardly flaring curved portion may also be utilized as this portion. In this regard, a parabolic shape is preferred. Reference here is made to Figure 3 where the outwardly flared portion is designated as 22'.

While the foregoing description and drawings represent the preferred embodiments of the present invention, it will be obvious to those skilled in the art that various changes and modifications may be made therein without departing from the true spirit and scope of the present invention.

## Claims

1. In a nuclear reactor having a bottom entry fuel assembly and a fuel assembly support plate with a round orifice for the passage of a flow stream and having a substantially square coolant channel entry area immediately below the fuel assembly, the improvement comprising:
a transition piece for coupling said flow stream from said orifice to said channel entry area, said transition piece having a first cylindrical portion with a constant diameter at least as large as the diameter of said orifice and disposed immediately above said orifice for allowing the flow stream from the orifice to fully enter said first portion and attach to inner sides of said first portion, a second portion for coupling to said channel entry area, said second portion having a substantially square upper section and a round lower section, and an outwardly flaring third portion for connecting said first portion with said second portion, said third portion having a cross-sectional diameter which increases in the flow direction from said first portion to said second portion for allowing controlled expansion of fluid in said transition piece.

2. The nuclear fuel assembly of claim 1 wherein said outwardly flaring third portion is conical in shape.

3. The nuclear fuel assembly of claim 1 wherein said conical third portion forms approximately a 15° angle with the longitudinal axis of the transition piece.

4. The nuclear fuel assembly of claim 1 wherein said outwardly flaring third portion is parabolic in shape.
